# EUROPEAN PATENT APPLICATION

(11) **EP 4 446 871 A1**
(43) Date of publication of application: **16.10.2024**
(21) Application number: 23167856.6
(22) Date of filing: 13.04.2023
(51) Int. Cl.: G06F 8/30, G06F 8/34, G06F 8/36

(54) **GENERATING SOFTWARE COMPONENTS**

(71) Applicant: Theaimegroup Ltd, Mitcham CR4 3SB (GB)
(72) Inventor: HARRISON, Alan, Mitcham, CR4 3SB (GB); POUROS, Andreas, Mitcham, CR4 3SB (GB)
(74) Representative: HGF

(57) **Abstract**

A computer-implemented method for generating a digital component is disclosed. The method comprises a user interface receiving design inputs into predefined data structures including an experience entity associated with an interface of the digital component, an information entity associated with a database of the digital component, and a knowledge entity for generating an output of the digital component. The method further comprises analysing the data structures and their inputs and generating instructions which when executed provide a representation of the digital component, analysing the data structures and their inputs and converting them into code identifiers, receiving an indication of desired programming language of the digital component and translating the code identifiers into the desired programming language.

## Description

### TECHNICAL FIELD

The present disclosure relates to methods, apparatus, devices, computer programs, non-transitory computer-readable medium for generating digital components.

### BACKGROUND

Developing a computer program is a lengthy, complex and resource-intensive process. It typically involves several stages including; planning and designing the program, coding the program, debugging the program, formalising the solution by running the program to make sure there are no syntax and logical errors, and maintaining the computer program. In addition, the process and the final computer program need to be documented so that the program can be maintained and updated.

There are various platforms that support the different stages in computer program development. For example, there are graphical user interface design programs that can be used for designing the visuals of a computer program such as an app, low-code and no-code programs for coding a computer program, and programs for managing the overall project of developing a computer program. However, these platforms have their limitations, for example, a graphical user interface design program is limited to visual designs, and low-code and no-code programs can only be used for generating simple software and typically need to be supported with additional coding. Furthermore, due to the very nature of developing a computer program, errors are easily introduced when writing the codes. Depending on the application of the computer program, for example for controlling a device, coding errors can have a catastrophic effect. Additionally, updating computer programs is often challenging and so supplementary software is typically created that run alongside the computer program, which unnecessarily burdens computational devices in terms of storage and processing power.

### BRIEF SUMMARY OF THE DISCLOSURE

According to an aspect of the present disclosure, a computer-implemented method is provided for generating a digital component. The method comprises a user interface receiving design inputs into predefined data structures including an experience entity associated with an interface of the digital component, an information entity associated with a database of the digital component, and a knowledge entity for generating an output of the digital component, analysing the data structures and their inputs and generating instructions which when executed provide a representation of the digital component, analysing the data structures and their inputs and converting them into code identifiers, receiving an indication of desired programming language of the digital component and translating the code identifiers into the desired programming language.

The method may further comprise based on the representation of the digital component, receiving a further design input into at least one of the predefined data structures so as to revise the digital component.

Translating the code identifiers into the desired programming language may comprise translating the code identifiers into a technology stack. The technology stack may be deployed to a technology stack service.

Analysing the data structures and their inputs and converting them into code identifiers may comprise analysing the experience entity, information entity and knowledge entity and associated input to identify predefined features, functionality and/or data, and referring to a database to convert the identified predefined features, functionality and/or data into code identifiers so as to form a digital blueprint of the digital component.

Translating the code identifiers into the desired programming language may comprise referring to a database to identify predefined code of the desired programming language corresponding to the code identifiers.

Translating the code identifiers into the desired programming language may comprise converting the information entity into a database table, the knowledge entity into back-end code, and the experience item into front-end code, and then connecting the database table through logic code to the front-end code and/or back-end code.

Translating the code identifiers into the desired programming language may comprise converting the information entity into code for accessing an external database, the knowledge entity into back-end code, and the experience item into front-end code, and then connecting the code for accessing the external database through logic code to the front-end code and/or the back-end code.

A user interface receiving design inputs into predefined data structures may comprise the user interface receiving a design file imported from a graphical user interface design program and/or design inputs for creating a graphical user interface of the digital component.

Analysing the data structures and their inputs and converting them into code identifiers may form a digital blueprint, and the digital blueprint may be reused for generating a digital component of a different programming language than the desired programming language.

The digital component may be for controlling a device.

The experience entity may be for defining an interface of the device with a user or another device, the information entity may be for defining a database of the associated with controlling the device, and/or the knowledge entity may be for generating an output of the device.

The experience entity may be configured to control a visual and/or audio interface with a user.

There is also provided an apparatus for generating a digital component comprising a processor and a memory, said memory containing instructions that when executed by the processor cause the apparatus to perform any of the methods described herein.

There is also provided a computer program for generating a digital component comprising computer readable code which, when run on a computer, causes the computer to carry out methods described herein.

There is also provided a non-transitory computer-readable medium comprising instructions that, when executed, cause a processor of a computing apparatus to perform methods described herein.

There is also provided a device for generating a digital component, the device comprising a memory, processor and a display, said memory containing instructions executable by said processor which when executed cause; the display to display a user interface and the user interface to receive design inputs into predefined data structures including an experience entity associated with an interface of the digital component, an information entity associated with a database of the digital component, and a knowledge entity for generating an output of the digital component, the device to analyse the data structures and their inputs and generate instructions which when executed cause the display to display a representation of the digital component, analyse the data structures and their inputs and convert them into code identifiers, receive an indication of desired programming language of the digital component and translate the code identifiers into the desired programming language so as to form executable instructions forming the digital component.

The processor of the device may further cause the device to perform any of the methods described herein when instructions contained in the memory is executed.

### BRIEF DESCRIPTION OF THE DRAWINGS

Various features of the present disclosure will be apparent from the detailed description which follows, taken in conjunction with the accompanying drawings, which together illustrate features of the present disclosure, and wherein:
Figure 1 is a schematic illustration of a platform and rendering engine for generating a digital component, a generated digital component and its interaction with a user or device;
Figure 2 is a schematic illustration of a generated digital component in the form of an interactive restaurant menu;
Figure 3 is a schematic illustration of a generated digital component for operating and analysing data of a smart appliance;
Figure 4 is a schematic illustration of a generated digital component for operating a robot;
Figure 5 is a schematic illustration of a generated digital component in the form of a remote control configured to operate various devices and for operating and analysing data of a smart appliance;
Figure 6 is a schematic illustration of a generated digital component integrated into a board game;
Figure 7 is a flow chart of a method for generating a digital component;
Figure 8 is a flow chart of a method for generating a digital component;
Figure 9 is a representative illustration of an apparatus for generating a digital component; and
Figure 10 is a representative illustration of a device for generating a digital component.

### DETAILED DESCRIPTION

In the following description, for purposes of explanation, numerous specific details of certain examples are set forth. Reference in the description to "an example" or similar language means that a particular feature, structure, or characteristic described in connection with the example is included in at least that one example, but not necessarily in other examples. It should also be understood that examples and features of examples can be combined where appropriate.

The present disclosure relates methods, apparatus, devices, computer programs and non-transitory computer readable storage medium for generating digital components such as digital products, services, technology stacks and/or computer programs including a set of instructions. In one example, the digital components may be for controlling hardware including, but not limited to, devices, sensors, robots, drones, appliances and/or servers, alternatively the digital component may be a graphical user interface such as an app or website, or a feature of an app or website. In particular, the term "digital component" as used herein may correspond to a set of instruction, software code or computer programming code of a particular programming language or languages, such python, Java, Javascript, C++, R, Kotlin, PHP, FireBase, Go or Swift. The present disclosure is not limited to a particular programming language but can be configured to generate a digital component of any programming language or combinations of programming language. Furthermore, the digital component may correspond to a full computer program or technology stack which a user would experience as complete product or service. In one example, the digital component may be considered to comprise several digital subcomponents corresponding to software code or combination of software codes relating to a particular feature or function of the digital component. As an example, the digital component may be a digital market such as Google Play or Apple App store and the digital subcomponents may include the subscription service, uploading functionality and downloading functionality of Google Play or Apple App store. In another example, the digital component may also be understood to mean a single digital subcomponent, for example, a particular feature or function, for example, a subscription service, uploading functionality and downloading functionality forming part of a product or service.

In view of the above, it should be understood that a digital component may be a digital subcomponent or a group of digital subcomponents forming said digital component.

The methods, apparatus, devices, computer programs and non-transitory computer readable storage medium according to the present disclosure are configured such that digital components can be generated much faster, with fewer errors and with much greater repeatability than existing methods as will become apparent from the description below.

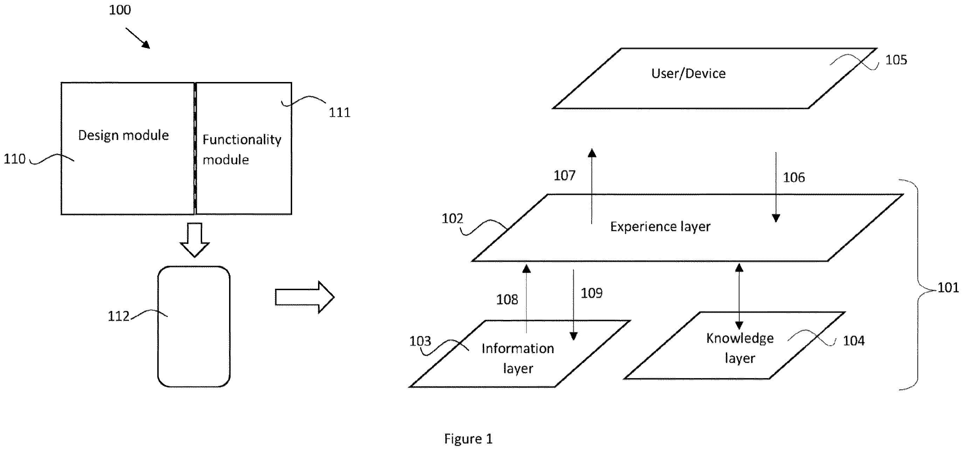

Referring now to figure 1, a platform 100 and a rendering engine 112 configured to generate a digital component 101 as discussed above are shown. The platform 100 comprises a user interface for the user to design and build the digital component by the use of experience items, information items and knowledge items, each of which may be grouped into corresponding lists. The rendering engine 112 translates these items and lists into a desired programming language and even technology stack as is described in more detail below.

The structure of the generated digital component 101 can be described as comprising three technology layers; an experience layer 102, information layer 103 and knowledge layer 104.

The experience layer 102 defines how a user or device 105 interacts with the digital component 101. For example, it may be visual aspects such as screens of an app, it may be a button for a user to press, a speaker and microphone for a user to interact with the digital component 101, or it may be an interface between a device and the digital component 101 where the device is configured to be controlled by the digital component generated by the platform 100. In one example, the experience layer can be described as receiving inputs 106 from a user or device 105 and providing an output 107 to a user or device 105, wherein the input may be any input, for example, a control input into a device, an audio input, light input, time input 106 and/or a value inputted into the digital component. The output 107 may be any output, for example, a visual output such as information displayed on screens of an app, audio or light output, and/or instructions for controlling a device.

The information layer 103 defines the data that sits within the digital component 101 or the data that the digital component 101 has access to. The data is the information that the user or device 105 is interacting with via the experience layer 102. For example, the information may be a database of information, an audio, a movie, a picture or any other information or values that the user or device 105 can interact with. The data of the information layer 103 may also be considered to be inputted 108 into or outputted 109 from the experience layer 102.

The knowledge layer 104 defines rules dictating how the experience layer 102 is to interact with the information layer 103. For example, the knowledge layer 104 may comprise conditional or unconditional rules such as IF...THEN... and/or just THEN...The rules set out how to generate an output 108 from the information layer 103 based on an input 109 into the information layer.

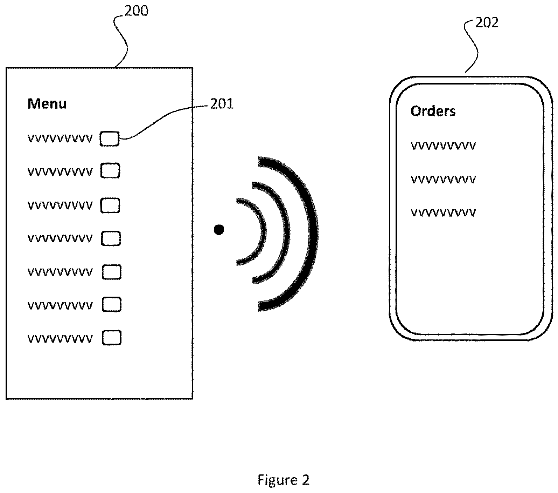

Examples of digital components and their structure in terms of experience layer, information layer and knowledge layer will now be described with reference to figure 2 to 6, however it should be understood that the present disclosure is not limited to these examples.

Figure 2 illustrates a digital component in the form of a set of instructions or computer program for controlling or operating a restaurant menu 200. The menu 200 comprises a processor and a memory, wherein the computer program is stored in the memory and the processor is configured to execute the computer program in response to a user input. The menu further comprises buttons 201 representing food items, wherein the buttons are connected to a communication circuitry configured to operate a communication interface for wireless communication. A user can order food using the menu by pressing a button 201 representing a desired food item. The menu 200 then sends a message to an external device 202 over the communication interface. The external device may be a tablet or screen located in the kitchen informing the chef of the order. In this example, the experience layer is the buttons that the user presses to order food. The information layer is the food items. The knowledge layer is the rules which determine the selection of specific food items based on the button pressed by the user. In other words, the knowledge layer defines the rules that generate the output from the information layer, wherein the output is the selected food items.

Continuing on this example, another digital component may be a set of instructions for a 3D printer for printing the menu 200. Here, the experience layer is the interface with the 3D printer, the information layer comprises various printing parameters, and the knowledge layer comprises the rules on how the printing parameters should be applied by the 3D printer.

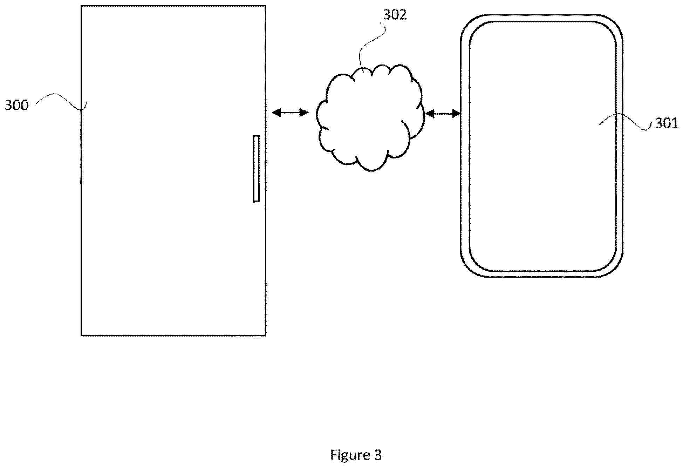

Figure 3 illustrates another digital component in the form of a set of instructions or computer program for controlling or operating an appliance forming part of the Internet of Things (IoT). In this example, the appliance is a fridge 300 comprising a communication circuitry configured to operate a communication interface for wireless communication with external devices 301 such as a smartphone or tablet over a network 302. The fridge 300 is also configured to detect and collate data on several aspects including use, food items present in the fridge, operating parameters and energy usage. The digital component, in other words the computer program, may comprise an app or a website located on an external device 301 and is configured to retrieve the data collated by the fridge 300 through the fridge's application programming interface (API) and then process the data to generate a meal plan, analyse fridge use and nutrition of food items in the fridge. The fridge 300 can also be controlled by the digital component, for example, the temperature can be increased or decreased through a user input or programmed to be in a holiday mode. In this example, the experience layer comprises the interactions between the fridge 300 and the external device(s) 301. The information layer comprises the data provided by the fridge's API, and the knowledge layer defines the rules on how to manipulate the data so as to generate an output. For example, the rules may generate an output of a shopping list, meal plan, notification notifying a user when the fridge door is being opened and/or the frequency and/or energy consumption.

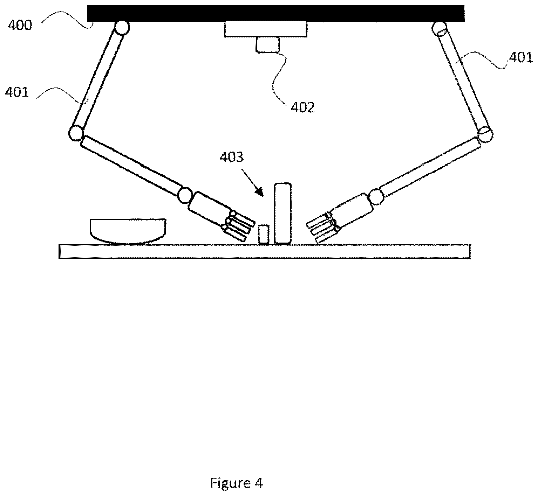

Figure 4 illustrates another example of a digital component for controlling robots. In this example, the robot 400 comprises robotic arms 401 and a camera 402, where the arms 401 are configured to prepare food and the camera is configured to identify different food items 403 going into the food. The robotic arms 401 and the camera 402 are connected to a controller configured to operate the robotic arms and camera. The controller comprises a processor and a memory, wherein the computer program is stored in the memory and the processor is configured to execute the computer program in response to an input. In this example, the experience layer are the robotic arms 401 and camera 402. The information layer comprises data values for controlling or moving the robotic arms such as position and orientation. The information layer also comprises data values for controlling the camera and also data values received from the camera representative of the recognised objects. The knowledge layer defines the operational values of the arm and camera mechanisms as well as the meal plans, ingredients, measurements of ingredients and the cooking methods.

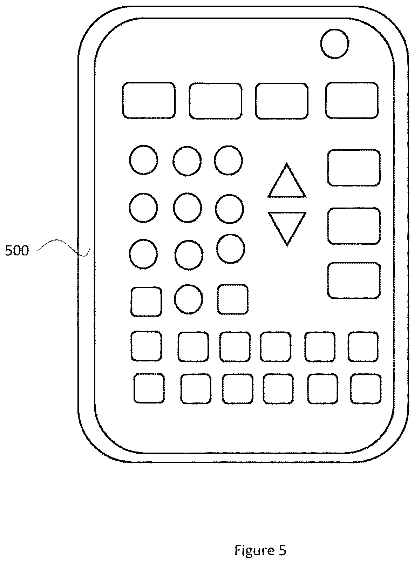

Figure 5 illustrates yet another example of a digital component which in this case is for controlling smart home devices such as Amazon products running Alexa, Google products, smart TVs, smart lights, smart thermostats, security hardware and doorbells. The digital component in this example is a set of instructions or computer program running on a device configured as a remote control 500. The remote control 500 comprises a processor and a memory, wherein the computer program is stored in the memory and the processor is configured to execute the computer program in response to a user input. The remote control is further configured with a communication circuitry configured to operate a communication interface for enabling messages to be sent from the remote control 500 to the smart home devices. The remote control may be convenient for users who finds it challenging to operate smart phones and associated apps. In this example, the experience layer is the buttons of the remote control, the information layer comprises the data values associated with each button and the data sent to the smart home devices in response to a button being pressed. The knowledge layer defines rules dictating the actions to be performed in response to a button being pressed.

Continuing on this example, another digital component may be a set of instructions for a 3D printer for printing the remote control 500. Here, the experience layer is the interface with the 3D printer, the information layer comprises various printing parameters, and the knowledge layer comprises the rules on how the printing parameters should be applied by the 3D printer.

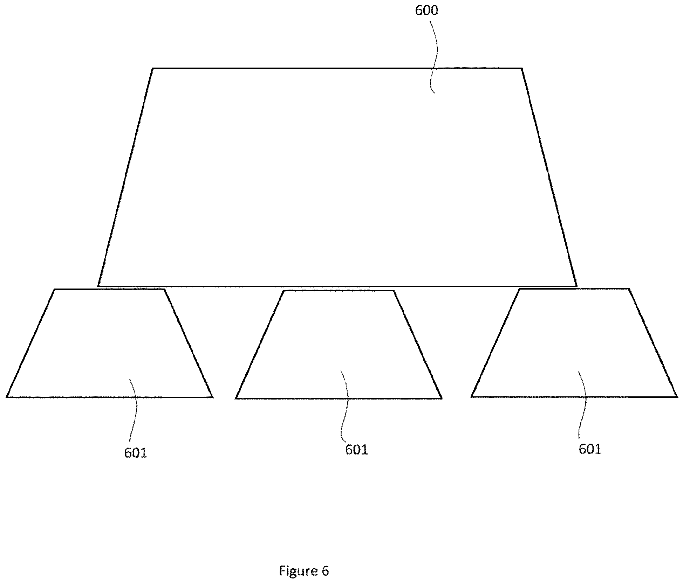

Figure 6 illustrates a further example of a digital component, which in this case is a set of instructions or computer program configured to run an interactive tabletop game 600. In this example, the interactive tabletop game comprises a processor and a memory, wherein the computer program is stored in the memory and the processor is configured to execute the computer program in response to a user input. The tabletop game further comprises a communication circuitry and a communication interface such as NFC tags to identify location of users and/or movers. Here, the user input may be pressing of a button on the tabletop game, a voice input or position of a player on the board. The output from the tabletop game in response to an input may be audible instructions, a narrator or a game adjudicator. In this example, the experience layer is the physical boardgame including buttons, microphones, speakers, or game controllers 601 etc. The information layer comprises, for example, inputs into the NFC tags that a mover is near, voice inputs by players, audio outputs from speakers or user inputs through game controllers 601. The knowledge layer defines rules dictating the actions or output to be performed in response to an input.

Continuing on this example, another digital component may be a set of instructions for a 3D printer for printing the interactive tabletop game. Here, the experience layer is the interface with the 3D printer, the information layer comprises various printing parameters, and the knowledge layer comprises the rules on how the printing parameters should be applied by the 3D printer.

The digital components described with reference to figures 2 to 6 are examples to illustrate various digital components that can be generated by the platform 100 and rendering engine 112 of the present disclosure. It should be understood that the platform 100 and the rendering engine 112 may form a system and run on a single device such as a computer or server, or it may be distributed across a plurality of devices. In one example, the platform 100 is run on a user device such as a computer, tablet, mobile phone and/or smart device, and the rendering engine 112 is run on a separate server receiving instructions and data from the platform 100 of the user device.

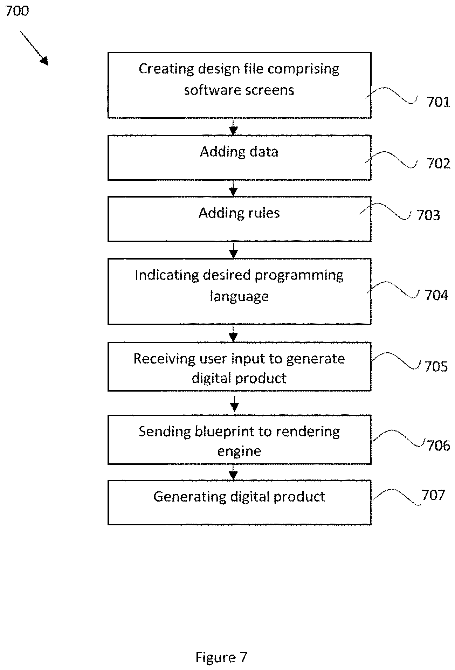

An example method 700 of how to generate a digital component using the platform 100 and rendering engine 112 of figure 1 will now be described with reference to figures 1 and 7. In this example, the digital component is an app configured to be run on a user device such as a mobile phone, however it should be understood that method 700 can be used for generating any digital component as described herein including a computer program or instructions for controlling a device.

As a first step 701, a user may create screens of the desired app using a graphical user interface design module forming part of the platform 100 to construct the look and feel of the screens. In this step, capabilities may also be added also referred to as experience components. Capabilities are functions and features of the digital component such as buttons for sending an email, uploading a document or for a device such as a robot to turn right, or it may be a display of a video feed, a weather forecast or any other interactive function. The screens (with or without capabilities) correspond to experience items, where common experience items can be grouped into experience lists. Experience items are a set of instructions that may define how a user or external device are to interact with the digital component. For example, in relation to an app, the experience items are a set of instructions defining the design and/or functionality of the screens. The set of instructions also include how it is to interact with an information item and knowledge item as described below. Common experience items can be grouped into experience lists. An experience item or experience list may also be referred to as an information entity or module.

In the next step 702, data may be added as information items. Information items are a set of instructions that define a value or a plurality of values, for example parameters or actuarial tables, and that make the values readable and editable through the experience items described above and/or also readable by the knowledge items as will described below. Common information items can be grouped into information lists. The data may be any of the data or information described herein, for example with reference to figures 1 to 6. Information items can be added to the screens designed in step 701 to represent data inputs and data outputs. An information item or information list may also be referred to as an information entity or module.

As a next step 703, rules may be defined as knowledge items. Knowledge items are a set of instructions that define a rule or a plurality of rules on how to manipulate, handle or read the information items and lists, which may be based on a user input. The set of instructions may also be readable and/or editable through the experience items and lists described above, for example a rule can be changed through an input into the experience item/list. Common knowledge items may be grouped to form a knowledge list. The rules of the knowledge items may set out how the data in the information items and information lists should be used to generate an output. A knowledge item or a knowledge list may also be referred to as a knowledge entity or module.

It should be understood that steps 701, 702 and 703, may be carried out by the platform 100 in response to user inputs but they do not have to be carried out in a predefined order, in other words, they can be performed in parallel or in any order. The experience items, experience lists, information items, information lists, knowledge items and knowledge lists form a design file, and each of these components can easily be updated in the platform 100 as is described in more detail below.

As experience items, experience lists, information items, information item lists, knowledge items and knowledge lists are created as described above, the platform 100 adds graphical symbols and/or contextual data tags to the code of the design file so as to form a digital blueprint. The platform achieves this by analysing the code of the design file to identify experience items, experience lists, information items, information item lists, knowledge items and knowledge lists and any features and functionality incorporated therein and then referring to a database to identify a corresponding graphical symbol and/or contextual data tag to each of the identified items, lists, features and functionalities and add it to the digital blueprint. The graphical symbols and/or contextual data tags are identifiers or code identifiers, meaning that they represent the generated experience items, experience lists, information items, information item lists, knowledge items and knowledge lists. These identifiers form a creative language which can be translated into any programming language as well as technology stack as explained below. The identifiers can be of any particular format, for example a numerical code with an alphabetical prefix. To explain further, the graphical symbols and/or contextual data tags denote databases, functions and features for both the front-end code and the back-end code of the digital component that is to be generated. Thus, by the adding of the graphical symbols and/or contextual data tags functionality is added to the design file.

Throughout operations 701 to 703, the user may view a representation of the digital component that is being generated. This is achieved by the platform 100 generating a clickable/interactive prototype or representation of digital component. This enables a user to visualise the digital component both in its appearance and functionality before the computer program of the digital component is actually generated. As such, a user can add, delete, amend any of the experience items, experience lists, information items, information lists, knowledge items and knowledge lists before proceeding to the next step 704 as described below.

It is described above that the screens of the app are created using a graphical user interface design module forming part of the platform 100, however in another example, the screens may already have been wireframed using a graphical user interface design software such as Adobe XD, Figma or Sketch. In these cases, the design file is imported into the platform 100, and once imported the platform 100 recognises the design of the screens and form experience items and experience lists. The platform does so by analysing the design file to identify descriptive identifiers, ID, forming part of the design file. The user will then add capabilities as described in step 701, add data and rules as set out in steps 702 and 703. As the experience items, experience lists, information items, information lists, knowledge items and knowledge lists are formed, the graphical symbols and/or contextual data tags are added as described above so as to form a digital blueprint.

Whether the screens have been generated by the platform 100 or another graphical user interface software, in the next step 704 the user decides which programming language the digital blueprint shall be converted into, for example, Python, FireBase (Google), C++, Oracle, GO (Google), Bootstrap, by indicating their choice through a user input in the platform 100. In the event that the user wishes to generate a digital component in more than one programming language, for example an app to be run on iPhones' operating system iOS and Android operating system, then they can access the digital blueprint repeatedly to indicate a different programming language. Should the digital component be a technology stack then the user can indicate which programming language they desire for the front end, back end and/or logic code, or just some of it. If a user only has a desire for the programming language for the front-end code, then they can indicate this and the platform 100 will determine appropriate programming languages for the remainder of the technology stack.

As a next step 705, the user indicates that they wish to proceed with generating the digital component, and once the platform receives this user input it sends 706 the digital blueprint and details on the programming language or languages to the rendering engine 112 which proceeds to generate the digital component 707 by automatically generating software code forming a set of instructions, computer program or technology stack where the software code comprises front-end code, logic code, front to back-end connecting code and databases and/or access to databases. This will now be described in more detail.

The rendering engine 112 is configured with or have access to a database or databases comprising lookup tables of graphical symbols and/or contextual data tags that are mapped to specific software code of programming languages so that the rendering engine can translate the graphical symbols and/or data tags of the blueprint into software code. To explain further, the rendering engine 112 uses algorithms and logical databases to translate the experience items, experience lists, information items, information lists, knowledge items and knowledge lists into various programming languages. Additionally, the rendering engine 112 is configured to analyse the digital blueprint to extract key information fields, where the fields have corresponding and independent translations and conversion operations that ensure that it is processed correctly. The rendering engine 112 may further be configured with additional error detection, prevention and/or correction operations that aim to prevent failures due to human error.

The particular conversion of the experience items, experience lists, information items, information lists, knowledge items and knowledge lists will now be described.

The rendering engine 112 converts information lists into database tables and convert each information item of the information lists into a column within each database table. The rendering engine 112 can alternatively convert information lists and information items into system variables, where database items are not required, or where data is being pulled into a generated digital component from existing external databases.

The rendering engine 112 further converts knowledge items and knowledge lists into back-end code, for example, JSON Objects, Stored Procedures, Database Queries or Mutations or Code algorithms.

The rendering engine also converts experience lists and experience items into front-end code. This code is then connected to the generated database tables or external databases through logic code such that data inputs can be added to the database through the front-end code and so that data outputs can be generated by the knowledge items converted into back-end code.

Should the rendering engine have created a computer program in terms of a technology stack for the digital component, then the technology stack can as a next step be deployed to a hosting service for software deployment, or it can be uploaded to any server for download by a mobile phone user.

The digital component created using method 700 has three interacting technology layers; experience, information and knowledge as described with reference to figure 1.

Although method 700 has been described for creating a digital component such as an app, it should be understood that method 700 can be applied for generating any type of digital component. For example, when generating a digital component for controlling a device, step 701 comprises a user defining or designing how the device is to interface with a user or another device. This can be for example defining screens for a mobile phone or similar where a user can control a device through various inputs on the screens, or defining an interface between two devices such that one device controls another device. In another example where the digital component is for interfacing with a user through audio, so for example the board game in figure 6, the user uses the experience items and lists for defining what audio should be played and in response to which input. As such, it should be understood that operation 701 is for defining and/or designing any interface how a user or device 105 is to interact with the digital component that is to be generated.

Advantageously, the generated digital component can easily be updated or changed as a user can access the design file and the digital blueprint through the platform 100. By accessing the design file, the user can change the experience items, experience lists, information items, information lists, knowledge items and knowledge lists. In other words, the user can interact with the data in the design file and review or edit the experience items, experience lists, information items, information lists, knowledge items and knowledge lists at any point in the design process, so operations 701 to 707, of the digital component. Thus, it negates the need to develop another software or patch to update the digital component as is required in the state of the art. This reduces resources required to generate a digital component/product and it also generates digital components/products that are much smoother and faster to run as the computer program of the digital product/component contains less code. Furthermore, as described above, the platform 100 may generate a clickable/interactive prototype or representation of the digital component before it is generated by the rendering engine 112. It should be understood that this representation can be accessible throughout any of steps 701-707 so that a user can visualise the digital component both in its appearance and functionality and easily revise the digital component.

Additionally, the digital component as described herein is reusable. That is, the experience items, experience lists, information items, information lists, knowledge items and knowledge lists forming the digital component can be reused (with or without being revised) for generating other digital components. For example, a digital component for controlling a specific external device can be reused and updated if needed for controlling a different external device. This can be achieved by reusing or copying the experience items, experience lists, information items, information lists, knowledge items and/or knowledge lists forming the digital component of the specific external device, and modify or adapt any of these to the specifications of the different external device. As described above, a digital component can be considered to be a complete product or service, or it can be considered to be a subcomponent of such a product or service, thus the whole product or service can be regenerated reusing the platform 100 or only specific aspects of the product or services are reused for another product or service.

It is envisaged that generated experience items, experience lists, information items, information item lists, knowledge items and knowledge lists used for forming digital components can be saved in a hub or a marketplace so that they can be reused for future or other digital components.

The present disclosure provides further advantages such as reduced time and resources required for generating digital components. To explain further, in the art developing a computer program is a lengthy, complex and resource-intensive process comprising several phases as set out in the background section. Also, the already known processes leave very little room for revising the digital component once it has been generated as decisions such as design, function and programming languages are decided early on in the design phase. In contrast, the present disclosure provides solutions that are quicker, easier and less resource intensive as the digital components can be generated automatically without the need for software developers, and revised without having a software developer having to rewrite code. Additionally, by the use of graphical symbols and/or data tags being translated into codes, programming errors can be reduced that otherwise can accidentally be introduced by software developers.

Method 700 have been described as being performed by platform 100 and rendering engine 112. It should be understood that in some examples platform 100 can reside on a user device such as a mobile phone, smart device or computer and the rendering engine 112 on a server. However, in other examples the platform 100 and the rendering engine 112 reside on the same device, or they may be distributed across several user devices and/or servers.

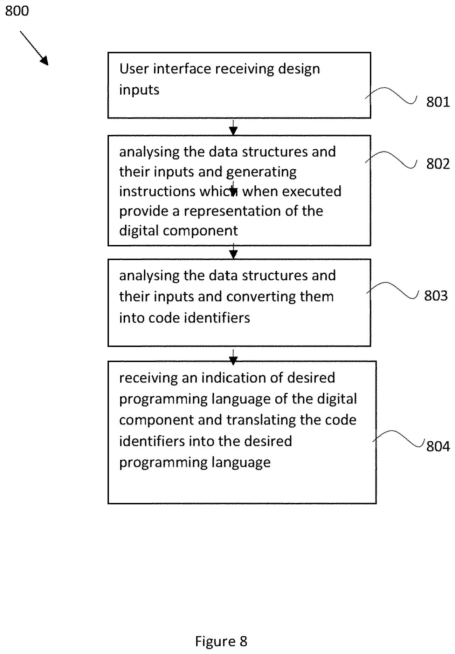

Another method 800 of the present disclosure will now be described with reference to figure 8. Method 800 is similar to method 700 and can be used for generating a digital component using the platform 100 and rendering engine 112 of figure 1. It should be understood that method 800 might comprise or implement any of the features of method 700 where appropriate and/or feasible. Additionally, method 800 can be used for generating any digital component, for example those described with reference to figures 2 to 6. Furthermore, method 800 provides at least the same advantages as those described with reference figure 7.

Method 800 is a computer-implemented method for generating a digital component. The method comprises a user interface receiving design inputs into predefined data structures including an experience entity associated with an interface of the digital component, an information entity associated with a database of the digital component, and a knowledge entity for generating an output of the digital component 801. Operation 801 may correspond to operation 701 to 703 in method 700, and so operation 801 may comprise any combination of the features of operations 701 to 703. Furthermore, the experience entity, information entity and knowledge entity may be the experience items, experience lists, information items, information lists, knowledge items and knowledge lists, respectively, as described above with reference to figure 7. The experience entity may be for defining an interface of the device with a user or another device, the information entity may be for defining a database of the associated with controlling the device, and the knowledge entity may be for generating an output of the device. In one example, the experience entity is configured to control a visual and/or audio interface with a user. Data structures may be understood to be predefined organisational modules associated with the experience, information and knowledge layers of the eventual digital component, as is also described with reference to figure 1.

Method 800 further comprises analysing the data structures and their inputs and generating instructions which when executed provide a representation of the digital component 802. The representation may be a clickable/interactive prototype or representation as described with reference to method 700. It enables a user to visualise the digital component both in its appearance and functionality before the digital component is generated.

In a next step 803, the method comprises analysing the data structures and their inputs and converting them into code identifiers. This step may correspond to steps 701 to 703 in method 700. For example, analysing the data structures and their inputs may comprise analysing the experience entity, information entity, knowledge entity and any features and functionality incorporated therein and then referring to a database to identify corresponding code identifiers. The code identifiers may be graphical symbol and/or contextual data tag and they represent the generated experience entity, information entity, knowledge entity. This is explained in more detail below.

Method 800 may further comprise receiving an indication of desired programming language of the digital component and translating the code identifiers into the desired programming language, 804. Step 804 may correspond to step 705 of method 700, and so may comprise any combination of the features of step 705.

It should be understood that steps 801 to 803, as well as receiving an indication of the desired programming language of the digital component of operation 804 may be performed by platform 100 as described herein, and translating the code identifiers into the desired programming language of operation 804 may be performed by the rendering engine 112. However, method 800 may be performed by any apparatus, device, server, computer, mobile phone, smart device or the like.

Further optional features of method 800 will now be described.

The method 800 may further comprise, based on the representation of the digital component, receiving a further design input into at least one of the predefined data structures so as to revise the digital component. The representation may be a visual and/or functional representation. This means that a user can visualise the digital component both in its appearance and functionality before the computer program of the digital component is actually generated. As such, a user can add, delete, amend any of the experience entity, information entity and knowledge entity at any point of method 800. Design input may comprise a user input relating to the appearance and/or functionality of a digital component or the means for interacting with a digital component by a user or device.

Method 800 may further comprise translating the code identifiers into a technology stack. In such an example, the code identifiers may be translated to more than one programming langue, for example, the code identifiers may be translated into front end, back end and/or logic code forming a technology stack. The user can indicate which programming language they desire for the front end, back end and/or logic code, or just some of it. For example, if a user only has a desire for the front end code, then they can indicate the desired front end language and appropriate programming languages for the remainder of the technology stack will be automatically determined.

Method 800 may further comprise deploying the technology stack to a technology stack service such as a hosting service for software deployment, or it can be uploaded to any server for download by a mobile phone user.

Referring now again to operation 803, analysing the data structures and their inputs and converting them into code identifiers may comprise analysing the experience entity, information entity and knowledge entity and associated input to identify predefined features, functionality and/or data, and referring to a database to convert the identified predefined features, functionality and/or data into code identifiers so as to form a digital blueprint of the digital component. The code identifiers form a creative language which can be translated into any programming language as well as technology stack as explained below. The identifiers can be of any particular format, for example a numerical code with an alphabetical prefix. To explain further, the graphical symbols and/or contextual data tags denote databases, functions and features for both the front-end code and the back-end code of the digital component that is to be generated. Thus, by the adding of the graphical symbols and/or contextual data tags functionality is added to the design file. Furthermore, the code identifiers form a digital blueprint which can easily be reused so as to form digital products of different programming languages. For example, should a user want to generate a digital component of a different programming language or technology stack, then they can reuse the digital blueprint and repeat step 804. This negates the need for software developers to code digital components for different operating systems.

In one example, translating the code identifiers into the desired programming language comprises referring to a database to identify predefined code of the desired programming language corresponding to the code identifiers. Therefore, should an alternative programming language be desired, then upon repeating step 804, a different database will be referred to where code identifiers correspond to predefined code of the alternative programming language. In particular, the digital blueprint can be reused for generating a digital component of a different programming language than the desired programming language.

Furthermore, translating the code identifiers into the desired or alternative programming language may comprise converting the information entity into a database table, the knowledge entity into back-end code, and the experience item into front-end code, and then connecting the database table through logic code to the front-end code and/or back-end code. Alternatively, the information entity may be converted into code for accessing an external database, the knowledge entity into back-end code, and the experience item into front-end code, and then the code for accessing the external database is connected through logic code to the front-end code and/or the back-end code.

It should also be understood that the user interface of method 800 may form part of platform 100, or alternatively, a third-party platform as described with reference to figure 7. In particular, the user interface receiving design inputs into predefined data structures may comprise receiving design inputs from a user for creating a graphical user interface of the digital component and/or receiving a design file imported from a graphical user interface design program.

As described herein any of the methods, apparatus, devices, computer program and non-transitory computer-readable medium are configured to generate a digital component. The digital component may be digital products, services, technology stacks and computer programs including a set of instructions. The digital components may be for controlling hardware including, but not limited to, devices, sensors, robots, drones, appliances and/or servers. Alternatively, the digital component may be a graphical user interface such as an app or website, or a feature of an app or website.

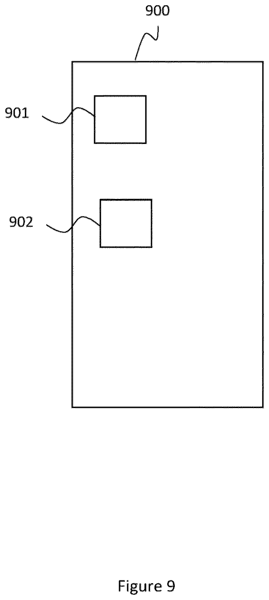

The methods of the present disclosure, as illustrated by the above examples, may be conducted in an apparatus. The methods may be conducted on receipt of suitable computer readable instructions, which may be embodied within a computer program running on the device or apparatus. Figure 9 illustrates an example of an apparatus for executing the methods of the present disclosure, for example on receipt of suitable instructions from a computer program. The apparatus 900 comprises a processor 901 and a memory 902. The memory 902 contains instructions executable by the processor 901 such that the apparatus 900 is operative to carry out the methods 700 and/or 800. The apparatus may be a computer, tablet, mobile phone, smart device, server or a combination thereof. In some examples, the apparatus may comprise a display for receiving user input and/or for displaying screens.

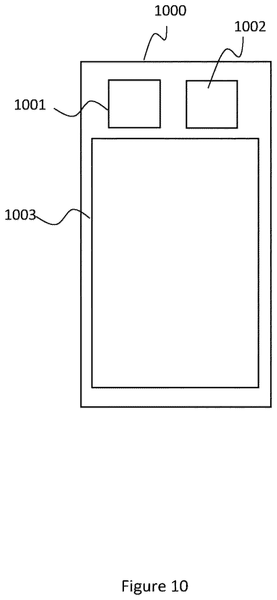

Another example for generating a digital component will now be described with reference to figure 10. Figure 10 discloses a device 1000 for generating a digital component, the device comprising a processor 1001, a memory 1002 and a display 1003, said memory containing instructions executable by said processor which when executed cause the display to display a user interface and the user interface to receive design inputs into predefined data structures including an experience entity associated with an interface of the digital component, an information entity associated with a database of the digital component, and a knowledge entity for generating an output of the digital component. The instructions which when executed by said processor further cause the device to analyse the data structures and their inputs and generate instructions which when executed cause the display to display a representation of the digital component. The instructions which when executed by said processor further cause the device to analyse the data structures and their inputs and convert them into code identifiers, receive an indication of desired programming language of the digital component and translate the code identifiers into the desired programming language so as to form executable instructions forming the digital component.

The memory 1002 of the device 1000 may further comprise instructions which when executed cause the processor 1001 to perform any of the features of methods 700 and/or 800.

The methods of the present disclosure may be implemented in hardware, or as software modules running on one or more processors. The methods may also be carried out according to the instructions of a computer program, and the present disclosure also provides a computer readable medium having stored thereon a program for carrying out any of the methods described herein. A computer program embodying the disclosure may be stored on a computer-readable medium, or it could, for example, be in the form of a signal such as a downloadable data signal provided from an Internet website, or it could be in any other form. In one example, a computer program for generating a digital component comprising computer readable code which, when run on a computer, causes the computer to perform any of the methods discussed herein. In another example, there is a non-transitory computer readable storage medium having executable instructions stored thereon, which, when executed by a processor, cause the processor to perform any of the methods discussed herein. In other examples, the non-transitory computer-readable storage medium may comprise program code to perform any of the methods discussed herein. An example non-transitory computer-readable storage medium may be the memory 902, 1002 shown in figures 9 and 10.

Also disclosed are a computer product operable to carry out methods according to the present disclosure and a computer program product comprising a computer readable medium having such a computer product stored thereon.

It should be noted that the above-mentioned embodiments illustrate rather than limit the disclosure, and that those skilled in the art will be able to design many alternative embodiments without departing from the scope of the appended claims. The word "comprising" does not exclude the presence of elements or steps other than those listed in a claim, "a" or "an" does not exclude a plurality, and a single processor or other unit may fulfil the functions of several units recited in the claims. Any reference signs in the claims shall not be construed so as to limit their scope.

The present teachings are not restricted to the details of any foregoing examples. Any novel combination of the features disclosed in this specification (including any accompanying claims, abstract, and drawings) may be envisaged. The claims should not be construed to cover merely the foregoing examples, but also any variants which fall within the scope of the claims.

## Claims

1. A computer-implemented method for generating a digital component, the method comprising;
a user interface receiving design inputs into predefined data structures including an experience entity associated with an interface of the digital component, an information entity associated with a database of the digital component, and a knowledge entity for generating an output of the digital component,
analysing the data structures and their inputs and generating instructions which when executed provide a representation of the digital component,
analysing the data structures and their inputs and converting them into code identifiers,
receiving an indication of desired programming language of the digital component and translating the code identifiers into the desired programming language.

2. A computer-implemented method according to claim 1, the method further comprises, based on the representation of the digital component, receiving a further design input into at least one of the predefined data structures so as to revise the digital component.

3. A computer-implemented method according to any preceding claims, wherein translating the code identifiers into the desired programming language comprises translating the code identifiers into a technology stack.

4. A computer-implemented method according to claim 3, wherein the technology stack is deployed to a technology stack service.

5. A computer implemented method according to any preceding claim, wherein analysing the data structures and their inputs and converting them into code identifiers comprises analysing the experience entity, information entity and knowledge entity and associated input to identify predefined features, functionality and/or data, and referring to a database to convert the identified predefined features, functionality and/or data into code identifiers so as to form a digital blueprint of the digital component.

6. A computer-implemented method according to any preceding claim, wherein translating the code identifiers into the desired programming language comprises referring to a database to identify predefined code of the desired programming language corresponding to the code identifiers.

7. A computer-implemented method according to any preceding claim, wherein translating the code identifiers into the desired programming language comprises converting the information entity into a database table, the knowledge entity into back-end code, and the experience item into front-end code, and then connecting the database table through logic code to the front-end code and/or back-end code.

8. A computer-implemented method according to any preceding claim, wherein translating the code identifiers into the desired programming language comprises converting the information entity into code for accessing an external database, the knowledge entity into back-end code, and the experience item into front-end code, and then connecting the code for accessing the external database through logic code to the front-end code and/or the back-end code.

9. A computer-implemented method according to any preceding claim, wherein a user interface receiving design inputs into predefined data structures comprises the user interface receiving a design file imported from a graphical user interface design program and/or design inputs for creating a graphical user interface of the digital component.

10. A computer-implemented method according to any preceding claim, wherein analysing the data structures and their inputs and converting them into code identifiers form a digital blueprint, and the digital blueprint can be reused for generating a digital component of a different programming language than the desired programming language.

11. A computer-implemented method according to any preceding claim, wherein the digital component is for controlling a device.

12. A computer-implemented method according to claim 11, wherein the experience entity is for defining an interface of the device with a user or another device, the information entity is for defining a database of the associated with controlling the device, and the knowledge entity is for generating an output of the device.

13. A computer implemented method according to claim 1, wherein the experience entity is configured to control a visual and/or audio interface with a user.

14. An apparatus for generating a digital component comprising a processor and a memory, said memory containing instructions that when executed by the processor cause the apparatus to perform any of the methods claimed in claims 1 to 13.

15. A computer program for generating a digital component comprising computer readable code which, when run on a computer, causes the computer to carry out a method according to any of claims 1 to 13.

16. A non-transitory computer-readable medium comprising instructions that, when executed, cause a processor of a computing apparatus to perform a method according to any of claims 1 to 13.

17. A device for generating a digital component, the device comprising a memory, processor and a display, said memory containing instructions executable by said processor which when executed cause;
the display to display a user interface and the user interface to receive design inputs into predefined data structures including an experience entity associated with an interface of the digital component, an information entity associated with a database of the digital component, and a knowledge entity for generating an output of the digital component,
the device to analyse the data structures and their inputs and generate instructions which when executed cause the display to display a representation of the digital component,
analyse the data structures and their inputs and convert them into code identifiers,
receive an indication of desired programming language of the digital component and translate the code identifiers into the desired programming language so as to form executable instructions forming the digital component.
